# EUROPÄISCHE PATENTSCHRIFT

(11) **EP 0 848 201 B1**
(45) Veröffentlichungstag und Bekanntmachung des Hinweises auf die Patenterteilung: **05.06.2002**
(21) Anmeldenummer: 97119319.8
(22) Anmeldetag: 05.11.1997
(51) Int. Cl.: F16L 33/00, F16L 33/18

(54) **Anschlusskörper für flüssigkeitsleitende Steckverbindungen**
Connecting device for socket and spigot couplings conveying fluids
Dispositif de raccordement pour raccords avec manchon ou douille transportant des fluides

(30) Priorität: 06.12.1996 DE 19650601
(43) Veröffentlichungstag der Anmeldung: 17.06.1998
(73) Patentinhaber: A. Raymond & Cie, F-38028 Grenoble-Cédex (FR)
(72) Erfinder: Hänsel, Mathias, 79595 Rümmingen (DE); Herberg, Udo, 79540 Lörrach (DE); Trede, Michael, 68170 Rixheim (FR)
(74) Vertreter: Kirchgaesser, Johannes, Dipl.-Ing.

(56) Entgegenhaltungen:
- DE-A- 3 439 522
- DE-U- 9 102 495
- GB-A- 2 088 001
- GB-A- 2 177 769

## Beschreibung

Die Erfindung bezieht sich auf einen Anschlußkörper für flüssigkeitsleitende Steckverbindungen, und insbesondere auf einen am Verbindungsstück angeformten Rohroder Schlauchstutzen, welcher in das Anschlußende eines Rohres oder Schlauches aus halbflexiblen Kunststoff einsteckbar ist.

Derartige Schlauchstutzen weisen üblicherweise an ihrem freien Ende eine sich konisch erweiternde Aufsteckfase sowie einen daran anschließenden zylindrischen Schaft mit mehreren kegelstumpfartigen Erweiterungen auf und besitzen am Ende des Einsteckbereichs einen sich ringförmig erweiternden Anschlagflansch. Der Schaftdurchmesser ist hierbei geringfügig größer als der Innendurchmesser des Kunststoffrohres, so daß das elastisch aufweitbare Kunststoffrohr nach dem Aufstecken auf den Stutzen eng am Schaft anliegt und die kegelstumpfartigen Erweiterungen sich in die Innenwand des Rohres etwas eingraben **(DE 44 13 346 C2).**

Um einen besseren Sitz des Rohres auf dem Anschlußkörper zu erreichen, sind aus **GB 2 177 769 A** Rohr- oder Schlauchstutzen bekannt, bei welchen sich auf der Rückseite der ersten kegelstumpfartigen Erweiterung eine konische Verjüngung anschließt und zwischen Erweiterung und Verjüngung eine umlaufende Rille vorgesehen ist, in welchem ein im Querschnitt runder Dichtungsring eingebettet ist.

Aufgabe der Erfindung ist es, den Anschlußkörper mit seiner kegelstumpfartigen Erweiterung und Verjüngung so auszubilden, daß das Schlauch- oder Rohrende über den Dichtungsring aufgeschoben werden kann, ohne diesen zu belasten oder gar mit seiner scharfen Vorderkante zu beschädigen.

Mit den Erfindungsmaßnahmen nach Anspruch 1 wird erreicht, daß durch die vorbeigerichtete Mantelfläche der ersten kegelstumpfartigen Erweiterung, die sich in einem geringen Abstand am Außenmantel des Dichtungsrings befindet, ein scharfer Kontakt zwischen der Schlauchvorderkante und dem Dichtungsring vermieden wird.

Aus **DE 34 39 522 A** ist eine andere Lösung zur Abdichtung des Rohrsitzes auf dem Anschlußkörper bekannt, bei der jedoch der Dichtungsring sehr weit von der ersten Erweiterung entfernt ist, so daß dort ebenfalls ein scharfer Kontakt zwischen der Schlauchvorderkante und dem Dichtungsring gegeben ist.

In weiterer Ausgestaltung der Erfindung ist es zum Aufstecken des Rohr- oder Schlauchendes besonders vorteilhaft, wenn die Länge des Schaftbereichs bis zur ersten Erweiterung etwa dem Schaftdurchmesser entspricht. Dadurch wird einerseits eine optimale Abstützwirkung auf dem zylndrischen Schaftbereich erreicht und andererseits verhindert, daß der durch die Steckverbindung fließende Kraftstoff an den Dichtungsring herankommt, so daß dieser nicht mit der Zeit von dem bekanntlich aggressiven Kraftstoff angefressen werden kann.

Weitere Merkmale der Erfindung ergeben sich aus den Unteransprüchen und der nachfolgenden Beschreibung eines in der Zeichnung dargestellten Ausführungsbeispiels. Es zeigt
- Figur 1: ein Verbindungsstück mit angeformten Schlauchstutzen und den zugehörigen Druckmittelschlauch vor dem Aufstecken,
- Figur 2: das gleiche Bild mit auf den Stutzen aufgestecktem Schlauch und
- Figur 3: eine vergrößerte Darstellung des Schlauchstutzens im Längsschnitt.

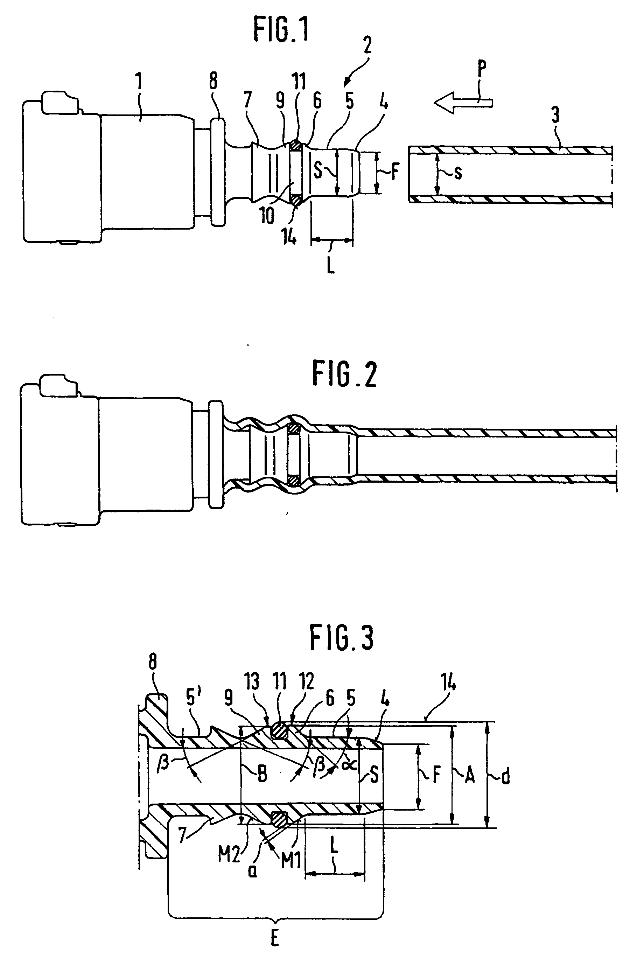

Der in Figur 1 mit **2** bezeichnete Rohr- oder Schlauchstutzen ist mit dem Verbindungsstück **1** einer Steckverbindung einstückig verbunden und dazu bestimmt, in das Anschlußende eines halbflexiblen Kunststoffrohres **3** eingesteckt und mit diesem absolut dicht verbunden zu werden. Der Stutzen **2** besitzt zu diesem Zweck an seinem freien Ende eine sich konisch erweiternde Aufsteckfase **4** und daran anschließend einen zylindrischen Schaft **5** mit mehreren kegelstumpfartigen Erweiterungen **6** und **7** und schließt am Ende des Einsteckbereichs **E** mit einem ringförmigen Anschlagflansch **8** ab.

Auf der Rückseite der kegelstumpfartigen Erweiterung **6** schließt sich eine konische Verjüngung **9** an. Am Übergang von der Erweiterung **6** zu der Verjüngung **9** befindet sich eine Rille **10** zur Aufnahme und Einbettung eines im Querschnitt runden Dichtungsrings **11,** welcher vorzugsweise aus einem gummiartigen Material hergestellt ist.

Die Aufsteckfase **4** hat an ihrer Stirnseite einen Durchmesser **F,** der geringfügig größer ist als der Innendurchmesser **s** des Kunststoffrohres **3,** so daß dieses sich beim Aufstecken auf den Stutzen **2** in Pfeilrichtung **P** bis auf den Schaftdurchmesser **S** aufweiten muß. Der sich bis zur ersten Erweiterung **6** erstreckende Schaftbereich **5** sollte sehr glatt sein und eine Länge **L** haben, welche etwa dem Schaftdurchmesser **S** entspricht.

Wie aus Figur 3 ersichtlich, besitzt die Mantelfläche **M1** der kegelstumpfartigen Erweiterung **6** einen Öffnungswinkel α, welcher mindestens um **40°,** vorzugsweise um **45°** zur Mantelfläche des Schaftes **5** ansteigt und in einem geringen Abstand **a** am Außenmantel **14** des Dichtungsrings **11** vorbeigerichtet ist. Unmittelbar vor der Rille **10** weist die Erweiterung **6** einen zylindrisch abgeflachten Bereich **12** auf, dessen Außendurchmesser **A** etwas kleiner ist als der Außendurchmesser **d** des Dichtungsrings **11.**

Dagegen weist die Mantelfläche **M2** der nachfolgenden Verjüngung **9** einen deutlich flacheren Neigungswinkel β zur Mantelfläche des Schaftes **5** auf, welcher bei etwa **20°** bis **30°** liegt, wobei die Mantelfläche **M2** in ihrer rückwärtigen Verlängerung den Außenmantel **14** des Dichtungsringes **11** tangiert oder sogar leicht "anschneidet". Auch besitzt die konische Verjüngung **9** unmittelbar hinter der Rille **10** eine abgerundete Kante **13,** deren Außendurchmesser **B** vorzugsweise um etwa **0,2** bis **0,4** mm kleiner ist als der Außendurchmesser **A** des abgeflachten Bereichs **12.**

Durch die vorgenannte Geometrie der Erweiterung **6** und Verjüngung **9** werden besonders günstige Bedingungen geschaffen, um das Anschlußende des Kunststoffrohres **3** mit einer nicht gezeigten Montagevorrichung über den Dichtungsring **11** und die nachfolgende Erweiterung **7** bis zum Anschlagflansch **8** zu schieben ( Figur 2 ).

Es versteht sich, daß die erfindungsgemäße Geometrie des Rohr- oder Schlauchstutzens **2** in gleicher Weise für ein in der Zeichnung nicht dargestelltes Einsteckteil verwendet werden kann, welches bei der eingangs erwähnten Steckverbindung mit dem Verbindungsstück **1** zusammenwirkt.

## Patentansprüche

1. Anschlußkörper für flüssigkeitsleitende Steckverbindungen, bestehend aus einem am Verbindungsstück ( 1 ) angeformten, in das Anschlußende eines flexiblen Kunststoffschlauches ( 3 ) einsteckbaren Schlauchstutzen ( 2 ), welcher an seinem freien Ende eine sich konisch erweiternde Aufsteckfase ( 4 ) und daran anschließend in Richtung zum Verbindungsstück (1) einen zylindrischen Schaft ( 5 ) mit mehreren, kegelstumpfartigen Erweiterungen ( 6 ) und ( 7 ) sowie am Ende des Einsteckbereichs E einen ringförmigen Anschlagflansch (8 ) aufweist, wobei sich auf der Rückseite der ersten kegelstumpfartigen Erweiterung ( 6 ) eine konische Verjüngung ( 9 ) anschließt, und zwischen der Erweiterung ( 6 ) und der Verjüngung ( 9 ) eine umlaufende Rille ( 10 ) vorgesehen ist, in welche ein im Querschnitt runder Dichtungsring ( 11 ) eingebettet ist, **dadurch gekennzeichnet, daß** die Mantelfläche ( M1 ) der ersten kegelstumpfartigen Erweiterung ( 6 ) einen Öffnungswinkel α von ca. 45° zur Mantelfläche des Schaftes ( 5 ) aufweist und in einem geringen Abstand ( a ) am Außenmantel ( 14) des Dichtungsrings ( 11 ) vorbeigerichtet ist, während die Mantelfläche ( M2 ) der nachfolgenden Verjüngung ( 9 ) einen deutlich flacheren Neigungswinkel β von etwa 20 bis 30° zur Mantelfläche des Schaftes ( 5 ) besitzt und ihre Verlängerung in Richtung des Außenmantels ( 14 ) des Dichtungsrings (11) diesen tangiert.

2. Anschlußkörper nach Anspruch 1, **dadurch gekennzeichnet, daß** die Länge ( L ) des zylindrischen Schaftbereichs ( 5 ) zwischen der Aufsteckfase ( 4 ) und der ersten Erweiterung ( 6 ) etwa dem Schaftdurchmesser ( S ) entspricht.

3. Anschlußkörper nach Anspruch 1 oder 2, **dadurch gekennzeichnet, daß** die erste kegelstumpfartige Erweiterung ( 6 ) unmittelbar vor der Rille ( 10 ) einen zylindrisch abgeflachten Bereich ( 12 ) aufweist und dieser Bereich ( 12 ) einen gegenüber dem Außendurchmesser ( d ) des Dichtungsrings ( 11 ) geringeren Außendurchmesser ( A ) aufweist.

4. Anschlußkörper nach Anspruch 3, **dadurch gekennzeichnet, daß** die konische Verjüngung ( 9 ) unmittelbar hinter der Rille ( 10 ) eine abgerundete Kante ( 13 ) aufweist, deren Außendurchmesser ( B ) um 0,2 bis 0,4 mm kleiner ist als der Außendurchmesser ( A ) des abgeflachten Bereichs ( 12 ).

## Claims

1. A connecting body for fluid-carrying plug connections, comprising a hose connection (2) which is formed on the connecting portion (1) and which can be inserted into the connecting end of a flexible plastic hose (3) and which at its free end has a conically enlarging plug-on chamfer (4) and adjoining same in a direction towards the connecting portion (1) a cylindrical shank (5) with a plurality of frustoconical enlargements (6) and (7) and at the end of the plug-in region E an annular abutment flange (8), wherein adjoining the rear side of the first frustoconical enlargement (6) is a conical taper (9) and provided between the enlargement (6) and the taper (9) is a peripherally extending groove (10) into which is embedded a sealing ring (11) of round cross-section, **characterised in that** the peripheral surface (M1) of the first frustoconical enlargement (6) has a flare angle α of about 45° with respect to the peripheral surface of the shank (5) and is directed at a small spacing (a) past the outer periphery (14) of the sealing ring (11) while the peripheral surface (M2) of the subsequent taper (9) has a markedly shallower angle of inclination β of about 20 to 30° relative to the peripheral surface of the shank (5) and the prolongation thereof in the direction of the outer periphery (14) of the sealing ring (11) touches same.

2. A connecting body according to claim 1 **characterised in that** the length (L) of the cylindrical shank region (5) between the plug-on chamfer (4) and the first enlargement (6) approximately corresponds to the shank diameter (S).

3. A connecting body according to claim 1 or claim 2 **characterised in that** the first frustoconical enlargement (6) has a cylindrically flattened region (12) immediately in front of the groove (10) and said region (12) is of an outside diameter (A) which is smaller than the outside diameter (d) of the sealing ring (11).

4. A connecting body according to claim 3 **characterised in that** the conical taper (9), immediately behind the groove (11), has a rounded edge (13) whose outside diameter (B) is 0.2 to 0.4 mm smaller than the outside diameter (A) of the flattened region (12).

## Revendications

1. Raccord pour systèmes d'accouplement amovibles de canalisations véhiculant des liquides, se composant d'une tubulure d'emmanchement de flexible (2) réalisée solidaire par moulage de l'élément d'accouplement (1) destinée à être introduite dans l'extrémité à raccorder d'une flexible en matière plastique souple (3), qui présente, au niveau de son extrémité libre, un biseau d'emmanchement (4) allant en s'évasant suivant un tracé conique et attenant à celui-ci dans la direction de l'élément d'accouplement (1) une partie principale cylindrique (5) faite de plusieurs portions évasées de forme tronconique (6) et (7) ainsi qu'à l'extrémité de la zone d'emmanchement E une bride de butée de forme annulaire (8), un rétrécissement conique (9) étant en l'occurrence attenant à la partie arrière du premier évasement de forme tronconique (6) et une rainure périphérique (10 étant en l'occurrence prévue entre la portion évasée (6) et la portion rétrécie (9), dans laquelle une rondelle d'étanchéité de forme circulaire (11) est insérée, **caractérisé en ce que** la surface enveloppe (M1) du premier évasement de forme tronconique (6) présente un angle d'ouverture α d'environ 45° par rapport à la surface enveloppe de la partie principale cylindrique (5) et que sa projection passe devant l'enveloppe extérieure (14) de la rondelle d'étanchéité (11) à une très faible distance (a), tandis que la surface enveloppe (M2) du rétrécissement (9) qui suit présente un angle d'inclinaison β nettement plus aplati d'environ 20 à 30° par rapport à la surface enveloppe de la partie principale (5) et que sa projection dans le sens de l'enveloppe extérieure (14) de la rondelle d'étanchéité (11) vient en affleurement de celle-ci.

2. Raccord selon la revendication 1, **caractérisé en ce que** la longueur (L) de la partie principale cylindrique (5) se situant entre le biseau d'emmanchement (4) et le premier évasement (6) correspond sensiblement au diamètre (S) de la partie principale.

3. Raccord selon la revendication 1 ou 2, **caractérisé en ce que** le premier évasement de forme tronconique (6) présente, immédiatement en amont de la rainure (10) une portion aplatie de forme cylindrique (12) et que cette portion (12) a un diamètre extérieur (A) plus petit que le diamètre extérieur (d) de la rondelle d'étanchéité (11).

4. Raccord selon la revendication 3, **caractérisé en ce que** le rétrécissement de tracé conique (9) présente, directement en aval de la rainure (10), un bord arrondi (13), dont le diamètre extérieur (B) est, dans une proportion comprise entre 0,2 et 0,4 mm, plus petit que le diamètre extérieur (A) de la portion aplatie (12).
